# EUROPÄISCHE PATENTSCHRIFT

(11) **EP 0 272 212 B1**
(45) Veröffentlichungstag und Bekanntmachung des Hinweises auf die Patenterteilung: **01.09.1993**
(21) Anmeldenummer: 87810732.5
(22) Anmeldetag: 09.12.1987
(51) Int. Cl.: C09B 44/10, C09B 26/04, D06P 1/41

(54) **Verfahren zur kontinuierlichen Herstellung kationischer Azo- oder Hydrazonfarbstoffe**
Process for continually producing azo or hydrazone dyes
Procédé de préparation en continu de colorants azo ou hydrazone

(30) Priorität: 15.12.1986 CH 4986/86
(43) Veröffentlichungstag der Anmeldung: 22.06.1988
(73) Patentinhaber: CIBA-GEIGY AG, 4002 Basel (CH)
(72) Erfinder: Ronco, Roland, Dr., CH-4148 Pfeffingen (CH); Ciapponi, Ermanno, CH-5268 Eiken (CH); Pessonneaux, Pierre, F-69006 Lyon (FR)

(56) Entgegenhaltungen:
- EP-A- 0 019 577
- EP-A- 0 023 671
- EP-A- 0 229 980
- DE-A- 3 602 587

## Beschreibung

Die vorliegende Erfindung betrifft ein Verfahren zur Herstellung kationischer Azo- oder Hydrazonfarbstoffe sowie deren Verwendung zum Färben von sauer modifizierten Synthesefasern.

Es ist bekannt, kationische Azofarbstoffe aus den nach der Synthese erhaltenen wässrigen Lösungen durch Zugabe von Elektrolyten in Form von zähflüssigen Oelen oder als kristalline Farbstoffsalze abzuscheiden. Dazu sind hohe Elektrolytkonzentrationen erforderlich, was bedeutet, dass die Elektrolyte in fester Form zugegeben werden müssen. Diese Arbeitsweise ist für ein kontinuierliches Herstellungsverfahren nur bedingt geeignet.

Es sind auch Herstellungsverfahren für kationische Azofarbstoffe beschrieben, bei denen in Mischungen aus Wasser und organischen Lösungsmitteln gearbeitet wird. Diese Verfahren erfordern jedoch aus ökologischen und ökonomischen Gründen die Rückgewinnung der Lösungsmittel, die zum Teil recht aufwendig ist.

Es wurde nun ein Verfahren zur kontinuierlichen Herstellung von kationischen Azo- oder Hydrazonfarbstoffen gefunden, in welchem ohne organische Lösungsmittel gearbeitet wird und bei dem kein Zusatz von festem Elektrolyt zur Abscheidung der Farbstoffe erforderlich ist. Ueberraschenderweise zeichnet sich das erfindungsgemässe Verfahren durch verbesserte Ausbeute, kürzere Reaktionszeit bei der Alkylierung und zum Teil bessere Reinheit der erhaltenen Farbstoffe aus.

Gegenstand der vorliegenden Erfindung ist ein Verfahren zur Herstellung von kationischen Farbstoffen durch Alkylierung eines elektrisch ungeladenen Azo- oder Hydrazonfarbstoffs, dadurch gekennzeichnet, dass die Alkylierung kontinuierlich durchgeführt wird und dass die Reaktionsmischung nach der Alkylierung so viel Elektrolyt enthält, dass sich ein Zweiphasensystem bildet, bestehend aus weitgehend farbstofffreier wässriger Elektrolytlösung und hochkonzentrierter öliger Farbstoffphase oder festem Farbstoff, und dass der Farbstoff aus dem Zweiphasensystem kontinuierlich abgeschieden wird.

Eine bevorzugte Ausführungsform des erfindungsgemässen Verfahrens besteht darin, dass man einen Azofarbstoff der Formel

D-N=N-K (1)

worin D den Rest einer heterocyclischen Diazokomponente und K den Rest einer Kupplungskomponente bedeutet, oder einen Hydrazonfarbstoff der Formel 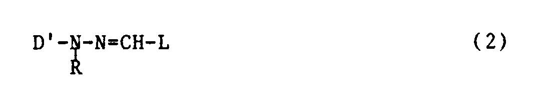
worin Dʹ den Rest einer aromatischen Diazokomponente, L den Rest einer Methylenbase einer N-heterocyclischen Verbindung und R Wasserstoff oder Alkyl bedeutet, alkyliert.

Der Azofarbstoff der Formel (1) oder der Hydrazonfarbstoff der Formel (2) kann auf beliebige Weise synthetisiert werden. Vorzugsweise werden sie jedoch kontinuierlich hergestellt durch Diazotierung und Kupplung und werden dann ohne Isolierung kontinuierlich alkyliert und abgeschieden.

Eine besonders bevorzugte Ausführungsform der Erfindung ist somit ein Verfahren zur kontinuierlichen Herstellung eines kationischen Farbstoffes der Formel

[D-N=N-K]^{⊕} An^{⊖} (3)

worin D den Rest einer heterocyclischen Diazokomponente, K den Rest einer Kupplungskomponente und An^{⊖} ein Anion bedeutet, oder eines Hydrazonfarbstoffes der Formel 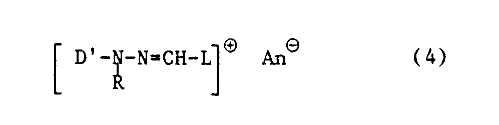
worin D den Rest einer aromatischen Diazokomponente, L den Rest einer Methylenbase einer N-heterocyclischen Verbindung, R Wasserstoff oder Alkyl und An^{⊖} ein Anion bedeutet, dadurch gekennzeichnet, dass man ein Amin der Formel D-NH₂ bzw. Dʹ-NH₂ in einer Mischung aus Wasser und Säure diazotiert, anschliessend mit einer Kupplungskomponente KH bzw. einer Methylenbase L=CH₂ zu einem Azo- oder Hydrazonfarbstoff umsetzt und danach mit einem Alkylierungsmittel umsetzt, wobei man so viel Säure einsetzt, dass sich nach der Alkylierung ein Zweiphasensystem bildet, bestehend aus weitgehend farbstofffreier wässriger Elektrolytlösung und hochkonzentrierter öliger Farbstoffphase oder festem Farbstoff.

Ein charakteristisches Merkmal des erfindungsgemässen Verfahrens besteht darin, dass nach der Alkylierung die Reaktionsmischung so viel Elektrolyt enthält, dass sich ein Zweiphasensystem bildet. Falls erforderlich kann nach der Alkylierung Elektrolyt zugegeben werden. Vorzugsweise setzt man jedoch bei der Diazotierung so viel Säure ein, dass sich nach der Alkylierung das erwähnte Zweiphasensystem ohne Zugabe von Salz bildet. Vorzugsweise setzt man die Gesamtmenge an Säure bereits zu Beginn zusammen mit dem diazotierbaren Amin ein, man kann aber auch einen Teil erst während der Reaktion zugeben.

Als Säure setzt man im erfindungsgemässen Verfahren eine anorganische oder organische Säure ein, z.B. Salzsäure, Schwefelsäure, Phosphorsäure oder Carbonsäuren, wie Ameisensäure, Essigsäure oder Propionsäure. Bevorzugt sind Salzsäure, Schwefelsäure, Ameisensäure oder Essigsäure, insbesondere Schwefelsäure.

Die benötigte Menge an Säure lässt sich leicht anhand der zur Ausbildung der zwei Phasen erforderlichen Elektrolytmenge ermitteln. Im allgemeinen verwendet man so viel, dass die Reaktionsmasse nach der Alkylierung 15 bis 25 Gew.%, vorzugsweise 18 bis 22 Gew.% Elektrolyt enthält.

Die Diazotierung wird vorzugsweise adiabatisch durchgeführt. Die bevorzugte Temperatur liegt bei -10 bis +60°C, insbesondere 0 bis 10°C. Die Dauer der Diazotierung hängt u.a. von der Art des Amins und der Temperatur ab, vorzugsweise beträgt sie 0,1 bis 10 Minuten.

Als Diazotierungsmittel können alle Agentien, die im Reaktionsgemisch salpetrige Säure entstehen lassen, z.B. Salpetrigsäureester oder Nitrosylverbindungen, wie Nitrosylschwefelsäure oder Nitrosylhalogenide verwendet werden. Vorzugsweise werden Nitrite, insbesondere Natriumnitrit, eingesetzt.

Die Diazotierung erfolgt in einer geeigneten Mischkammer, vorzugsweise einem statischen Mischer. Anschliessend wird die Reaktionsmischung kontinuierlich mit einer Kupplungskomponente bzw. Methylenbase umgesetzt, vorzugsweise in einem Durchflussreaktor. Es ist auch möglich, die Diazotierung und Kuppling simultan durchzuführen, d.h., die Diazotierung in Gegenwart der Kupplungskomponente vorzunehmen.

Diese Umsetzung erfolgt bei einer Temperatur von etwa 0 bis 60°C, vorzugsweise 20 - 60°C und insbesondere 25 bis 45°C. Die benötigte Zeit hängt unter anderem von der Art der Diazo- und Kupplungskomponente bzw. Methylenbase ab und liegt im allgemeinen zwischen etwa 0,1 und 20 Minuten.

Die Kupplungskomponente bzw. Methylenbase kann als Suspension, Emulsion oder Lösung, z.B. in Wasser oder Eisessig, oder auch in unverdünnter Form eingesetzt werden. Die erhaltene Lösung oder Suspension des Azo- bzw. Hydrazonfarbstoffes wird anschliessend kontinuierlich in einen weiteren Reaktor geleitet und dort unter Zugabe einer starken Base und eines Alkylierungsmittels neutralisiert und alkyliert.

Vorzugsweise verwendet man einen Reaktor, der mehrere, vorzugsweise 2 bis 10 Zugabestellen für das Alkylierungsmittel und die starke Base aufweist. Dies ermöglicht eine Arbeitsweise, bei der der pH-Wert während der Dauer der Alkylierung weitgehend konstant ist. Der pH-Wert liegt vorzugsweise zwischen 4 und 13 und die Temperatur bei der Alkylierung liegt etwa zwischen 25 und 80°C, vorzugsweise zwischen 40 und 60°C.

Geeignete Alkylierungsmittel sind z.B. Ester, wie Dimethylsulfat oder Diethylsulfat,Halogenverbindungen wie z.B. Butylbromid, oder Epoxide, wie z.B. Ethylenoxid, Propylenoxid oder Epichlorhydrin.

Als starke Basen dienen z.B. Natrium- oder Kaliumcarbonat oder insbesondere Kaliumhydroxid und vor allem Natriumhydroxid.

Nach der Alkylierung wird die Reaktionsmischung in ein geeignetes Gefäss geleitet, wo die Abtrennung der sich bildenden zwei Phasen erfolgt. Die eine Phase besteht aus weitgehend farbstofffreier, wässriger Elektrolytlösung, welche u.U. auch noch aus der Synthese zurückgebliebene Verunreinigungen enthält. Die andere Phase besteht aus kristallinem Farbstoff oder vorzugsweise aus hochkonzentriertem Farbstofföl. In welcher Form diese zweite Phase vorliegt, hängt von der Art des gebildeten Farbstoffes ab, lässt sich jedoch auch durch die Reaktionsbedingungen, wie z.B. Temperatur, Art der verwendeten starken Base, Farbstoffkonzentration oder Verweilzeit, beeinflussen.

Falls das Erkennen der Phasengrenze bei den zwei flüssigen Phasen Schwierigkeiten bereitet, kann man bei der Aufarbeitung durch geeignete Massnahmen, z.B. Leitfähigkeitsmessungen, die Phasen unterscheiden.

Als Diazokomponenten für die Herstellung der Azofarbstoffe kommen für das erfindungsgemässe Verfahren heterocyclische diazotierbare Amine in Frage. Vorzugsweise handelt es sich um Verbindungen, deren Aminogruppe an einen aromatischen Fünfring gebunden ist, welcher mindestens ein N-atom im Ring aufweist. Geeignete Verbindungen entsprechen z.B. der Formel

D - NH₂ (5)

worin D der Rest eines Triazols, Thiazols, Pyrazols oder Thiadiazols ist. Die Reste D können substituiert sein, z.B. durch C₁-C₄-Alkyl, C₁-C₄-Alkoxy, Cyclohexyl, Phenyl, Naphthyl, Amino, Alkanoylamino, Alkylamino oder Dialkylamino oder können auch ankondensierte Ringe aufweisen. Geeignete Verbindungen D - NH₂ sind beispielsweise: 3-Amino-1,2,4-triazol, 3,5-Diamino-1,2,4-triazol, 3-Amino-5-phenyl-1,2,4-triazol, 6-Alkoxy-2-amino-benzothiazol, 2-Amino-1,3,4-thiadiazol, 2-Amino-5-alkylamino-1,3,4-thiadiazol, 5-Amino-3-phenyl-1,2,4-thiadiazol, 2-Amino-benzothiazol, 5-Amino-1,2,3-thiadiazol, 2-Amino-thiazol-1,3, 6-Acetylamino-2-amino-benzothiazol, 3-Amino-benzopyrazol oder 2-Phenyl-3-aminopyrazol.

Für das erfindungsgemässe Verfahren besonders bevorzugte Verbindungen D - NH₂ sind 3-Amin-1,2,4-triazol, 6-Methoxy-2-amino-benzothiazol-1,3 sowie 2-Amino-5-diisopropylamino-1,3,4-thiadiazol, insbesondere 3-Amino-1,2,4-triazol.

Bei den Kupplungskomponenten HK handelt es sich um die bei kationischen Azofarbstoffen gebräuchlichen Kupplungskomponenten. Besonders geeignet sind Verbindungen der Formel 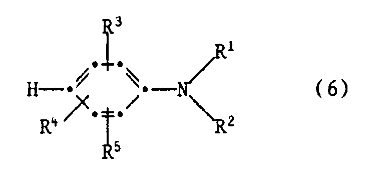
worin
- R¹: Wasserstoff oder unsubstituiertes oder substituiertes Alkyl oder Alkenyl,
- R²: Wasserstoff oder unsubstituiertes oder substituiertes Alkyl, Alkenyl, Cycloalkyl oder Phenyl, oder
- R¹ und R²: zusammen mit dem N-Atom einen 5- oder 6-gliedrigen heterocyclischen Ring, der gegebenenfalls noch ein oder zwei weitere Heteroatome als Ringglieder enthalten oder/und substituiert sein kann, oder R¹ zusammen mit R³ in ortho-Stellung zur Aminogruppe einen teilhydrierten, gegebenenfalls substituierten 5- oder 6-gliedrigen heterocyclischen Ring, der gegebenenfalls noch ein zusätzliches N- oder O-Atom als Ringglied enthalten kann,
- R³ und R⁴: unabhängig voneinander Wasserstoff, Alkyl, Alkoxy, Alkanoylamino oder Halogen und
- R⁵: Wasserstoff oder zusammen mit R⁴ in ortho-Stellung die Ergänzung zu einem ankondensierten Benzolring bedeutet.

Sofern Reste in obiger Formel als gegebenenfalls substituiert bezeichnet sind, kommen als Substituenten insbesondere nichtionische Substituenten oder Carboxyl in Betracht.

Nichtionische Substituenten sind vor allem die in der Farbstoffchemie üblichen, nicht dissoziierenden Substituenten wie z.B. Cyano, Hydroxy, Halogen (z.B. Fluor, Chlor, Brom), Nitro, Alkyl, Amino, Mono- oder Dialkylamino, Phenyl, Alkoxy, Acyl, Acyloxy, Alkoxycarbonyl oder Alkoxycarbonyloxy. Acyl bedeutet dabei insbesondere Alkylcarbonyl (Alkanoyl), gegebenenfalls substituiertes Benzoyl (Substituenten wie für Phenyl), Alkylsulfonyl, Phenylsulfonyl, Mono- oder Dialkylaminocarbonyl, Benzylaminocarbonyl oder Dialkylaminosulfonyl, vor allem aber Alkylcarbonyl (Alkanoyl).

Bevorzugte Substituenten für Alkylreste R¹ oder R² sind: Hydroxy, Halogen (z.B. F, Cl, Br), Cyano, Alkoxy, Carboxy, Aminocarbonyl, Alkoxycarbonyl, Acyl, Acyloxy (bevorzugte Bedeutungen für Acyl siehe oben, insbesondere Alkylcarbonyl), Phenyl, Phenoxy oder Benzyloxy. Die gleichen Substituenten kommen auch für Cycloalkylreste in Betracht, insbesondere aber Alkyl, Alkoxy, Halogen oder Cyano.

Bevorzugte Substituenten für Phenylreste R² sind: Cyano, Hydroxy, Halogen (z.B. F, Cl, Br), Alkyl, Alkoxy, Alkoxycarbonyl, Carboxyl, Aminocarbonyl, Nitro, Aminosulfonyl, Alkylcarbonylamino oder Benzoylamino. Die jeweiligen Phenylreste können von diesen Substituenten beispielsweise 1 - 3, insbesondere 1 oder 2 enthalten.

In den obigen Substituenten sowie in der gesamten übrigen Beschreibung haben, sofern nichts anderes angegeben ist, Alkylgruppen als solche oder Alkylgruppen als Teile von zusammengesetzten Substituenten (z.B. Alkoxy, Alkoxycarbonyl, Dialkylamino usw.) insbesondere 1 bis 8, vorzugsweise 1 - 4, C-Atome. Geeignete Alkylgruppen sind z.B. Methyl, Ethyl, n- oder iso-Propyl, n-, sec.- oder tert.-Butyl.

Als Cycloalkylgruppen sind Cyclopentyl und Cyclohexyl bevorzugt. Halogen ist beispielsweise Chlor, Brom oder Fluor, insbesondere Chlor. Alkenylgruppen weisen z.B. 2 - 8, insbesondere 2 - 5, C-Atome auf. Als Substituenten für sie kommen z.B. diejenigen in Betracht, die oben für Alkyl angegeben werden; vorzugsweise sind sie jedoch unsubstituiert.

R¹ und R² können zusammen mit dem Stickstoffatom, an das sie gebunden sind, einen 5- oder 6-gliedrigen, vorzugsweise gesättigten, Heterocyclus bilden. Dieser kann neben dem N-Atom noch 1 oder 2 Heteroatome, insbesondere aus der Gruppe O, N und S, als Ringglieder enthalten, vorzugsweise ein weiteres Heteroatom, vor allem N oder O. Diese Heterocyclen können substituiert sein, z.B. mit Alkyl, Hydroxyalkyl, Cyanoalkyl oder Alkoxy. Beispiele für solche Heterocyclen sind: Pyrrolidin, Piperidin, Morpholin, Piperazin, N-Methyl-, N-Ethyl- oder N-Hydroxyethyl-piperazin, Oxazolidin, Thiomorpholin und Pyrazolidin, wobei die 4 erstgenannten bevorzugt sind.

Die von R¹ und R³ gemeinsam mit dem N-Atom gebildete Ergänzung zu einem teilhydrierten heterocyclischen Ring führt zu einem an den Benzolring ankondensierten 5- oder 6-gliedrigen, ein oder 2 N-Atome bzw. ein N- und ein O-Atom enthaltenden Heterocyclus, der mindestens eine Doppelbindung aufweist. Ein derartiger Heterocyclus kann auch substituiert sein, beispielsweise durch Alkyl, Alkoxy, Halogen oder Hydroxy, insbesondere durch Alkyl. Die Zahl der Alkylgruppen kann dabei 1 bis 6, z.B. 1 bis 5, insbesondere 1 bis 4 oder 1 bis 3 sein. Besonders bevorzugt sind dabei Methylgruppen.

Beispielsweise bildet R¹ und R³ gemeinsam mit dem N-Atom und dem ankondensierten Benzolring einen gegebenenfalls durch 1 bis 5 C₁-C₄-Alkylgruppen substituierten Dihydroindol-, Tetrahydrochinolin-, Tetrahydrochinoxalin- oder Tetrahydro-1,4-benzoxazinrest, wobei der Dihydroindol- und Tetrahydrochinolinrest bevorzugt sind. Das Stickstoffatom ist selbstverständlich durch den Rest R² substituiert.

Von praktischer Bedeutung sind vor allem jene Verbindungen der Formel (6), worin R¹ und R² unabhängig voneinander C₁-C₄-Alkyl, C₁-C₄-Hydroxyalkyl, C₁-C₄-Alkoxy-C₁-C₄-Alkyl, C₁-C₅-Cyanoalkyl, C₁-C₄-Halogenalkyl oder Benzyl oder R¹ und R² zusammen mit dem N-Atom einen Piperidin-, Morpholin- oder Piperazinring oder R¹ zusammen mit R³ in ortho-Stellung zur Aminogruppe und mit dem ankondensierten Benzolring einen gegebenenfalls mit 1 bis 4 C₁-C₄-Alkyl-, vorzugsweise Methylgruppen, substituierten Tetrahydrochinolinrest, R³ Wasserstoff oder zusammen mit R¹ den vorstehend beschriebenen Rest, R⁴ Wasserstoff, C₁-C₄-Alkyl, C₁-C₄-Alkoxy oder Halogen, vorzugsweise Wasserstoff, und R⁵ Wasserstoff bedeuten, wobei jene besonders bevorzugt sind, worin R¹ und R² unabhängig voneinander C₁-C₄-Alkyl oder R¹ zusammen mit R³ in ortho-Stellung zur Aminogruppe und mit dem ankondensierten Benzolring einen unsubstituierten oder mit 1 - 4 Methylgruppen substituierten Tetrahydrochinolinrest, R₃ Wasserstoff oder zusammen mit R¹ den vorstehend beschriebenen Rest und R⁴ und R⁵ jeweils Wasserstoff bedeuten.

Eine weitere Gruppe von besonders geeigneten Kupplungskomponenten sind Verbindungen der Formel 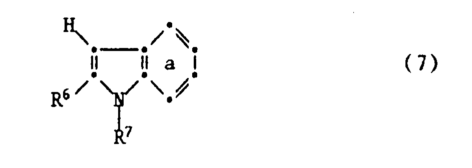
worin
- R⁶: Methyl, Ethyl oder Phenyl und
- R⁷: Wasserstoff, Benzyl oder ggf. substituiertes Alkyl bedeutet und der Ring a ggf. substituiert sein kann.

Geeignete Substituenten für R⁷ in der Bedeutung Alkyl sind die Gruppen, die weiter vorne als Substituenten für die Alkylreste R¹ und R² aufgeführt sind. Geeignete Substituenten für den Ring a sind z.B. C₁-C₄-Alkyl, C₁-C₄-Alkoxy, Halogen, wie Brom oder vor allem Chlor, Cyan, Acetylamino oder C₁-C₄-Alkylsulfonyl. Vorzugsweise ist der Ring a unsubstituiert. In bevorzugten Verbindungen der Formel (7) ist R⁶ Methyl oder Phenyl, R⁷ Wasserstoff und der Ring a ist unsubstituiert.

Als Diazokomponenten für die Herstellung der Hydrazonfarbstoffe kommen für das erfindungsgemässe Verfahren vor allem Verbindungen der Formel

Dʹ-NH₂ (8)

in Betracht, worin Dʹ der Rest eines aromatischen Amins ist, der gegebenenfalls durch Alkoxy, Nitro, Halogen, Hydroxyalkyl oder Hydroxyalkoxy substituiert ist.

Bevorzugt ist Anilin oder durch C₁-C₄-Alkoxy, Nitro, Halogen, Hydroxy-C₁-C₄-alkyl oder Hydroxy-C₁-C₄-alkoxy substituiertes Anilin.

Als Methylenbase setzt man die aus der Chemie der Hydrazonfarbstoffe bekannten Methylenbasen ein. In Frage kommen z.B. ein Benzimidazolin, Indolin, Pyrimidinon oder Benzoindolin mit aktivierter Methylengruppe.

Besonders geeignet sind 1,3-Dimethyl-2-cyanmethylenbenzimidazolin, 1,3-Dimethyl-2-carboxymethylenbenzimidazolin, 1,3-Dimethyl-6-methylenpyrimidinon-2, 1-Ethyl-2-methylenbenzo(c,d)indolin oder insbesondere 1,3,3-Trimethyl-2-methylenindolin.

Das erfindungsgemässe Verfahren bietet den Vorteil besonders kurzer Reaktionszeiten, insbesondere für die Alkylierung. Es wird vorzugsweise in der Art durchgeführt, dass man für die Gesamtreaktion, Diazotierung, Kupplung, Alkylierung und Abscheidung, bei Temperaturen bis zu 50°C maximal 90 Minuten benötigt.

Nach dem neuen Verfahren fallen die Farbstoffe entweder als kristalline Verbindungen oder als flüssige hochkonzentrierte Farbstofföle an und können anschliessend leicht auf an sich bekannte Art und Weise zu festen oder flüssigen Farbstoffpräparaten weiterverarbeitet werden.

Beim Anfall als kristalline Verbindungen werden sie z.B. gewaschen, getrocknet und ggf. mit weiteren Zusätzen, wie z.B. Stellmitteln oder Entstaubungsmitteln versehen.

Bevorzugt ist jedoch die Durchführung des erfindungsgemässen Verfahrens in der Art, dass die Farbstoffe sich als Farbstofföl abscheiden.

Da das abgeschiedene wässrige, hochkonzentrierte Farbstofföl meist leichter als die wässrige, wenig Farbstoff enthaltende Salzlösung ist, kann man es isolieren, indem man die schwere Phase einfach nach unten ablaufen lässt. Im umgekehrten Falle wird die schwerere, den Farbstoff enthaltende Phase durch Ablaufenlassen isoliert.

Das erfindungsgemässe erhaltene Farbstofföl enthält ausser Farbstoff und Wasser nur geringe Mengen anorganischer Salze, höchstens 15 Gewichtsprozent und normalerweise weniger als 10 Gewichtsprozent.

Bevorzugte hochkonzentrierte Farbstofföl gemäss vorliegender Erfindung enthalten
(a) 30 bis 90 Gewichtsprozent, vorteilhaft 50 bis 80 Gewichtsprozent eines oder mehrerer Salze eines kationischen Farbstoffes,
(b) 55 bis 8 Gewichtsprozent, vorteilhaft 45 bis 15 Gewichtsprozent Wasser und
(c) 1 bis 15 Gewichtsprozent, vorteilhaft 2 bis 8 Gewichtsprozent mindestens eines anorganischen Salzes bzw. einer anorganischen Base.

Die gemäss vorliegender Erfindung erhaltenen hochkonzentrierten Farbstofföle eignen sich zur Herstellung von festen und flüssigen Farbstoffpräparaten.

Zur Herstellung von festen Farbstoffpräparaten wird der Rohfarbstoff nach üblicher Art und Weise unter Zusatz von den üblichen Hilfsmitteln wie z.B. Staubbindemittel, Stellmittel und/oder Dispergiermittel weiterverarbeitet. Die Zusätz können jedoch auch vor dem Trocknen der Farbstofflösung zugegeben werden.

Da die gemäss vorliegender Erfindung erhaltenen hochkonzentrierten Farbstofföle relativ salzarm sind, eignen sie sich vorzüglich auch zur Herstellung von flüssigen Farbstoffpräparaten. Die Farbstofföle werden nach bekannter Art und Weise gegebenenfalls mit Wasser und/oder organischem Lösungsmittel auf einfache Art auf die gewünschte Farbstärke verdünnt. Als organische Lösungsmittel kann man vorteilhaft mit Wasser in jedem Verhältnis mischbare Lösungsmittel, wie z.B. ein- und mehrwertige Alkohole wie Glykole und Glykolderivate und vor allem organische Säuren wie niederaliphatische Carbonsäuren, inbesondere Essigsäure verwenden. Auch weitere in flüssigen Farbstoffpräparaten übliche Zusätze wie Amine, z.B. Alkanolamine und Alkylamine sowie Emulgatoren werden vorteilhaft den flüssigen Farbstoffpräparaten zugegeben. Auf diese Weise erhält man dünnflüssige, lagerstabile flüssige Farbstoffpräparate.

Die nach der Abtrennung der Farbstoffe verbleibende Phase enthält ausser anorganischen Salzen und anderen aus der Synthese zurückgebliebenen Verunreinigungen nur unwesentliche Mengen Farbstoff, die sich leicht, z.B. mit ein wenig Hydrosulfit entfärben lassen.

Die Verwendung der Farbstoffe ist bekannt. Vor allem eignen sie sich zum Färben von sauer modifizierten Synthesefasern, insbesondere solchen aus Polyacrylnitrilmaterial oder von Mischfasern welche solches Material enthalten.

In der EP-A-0 019 577 und in der DE-A-3 602 587 sind bereits Verfahren zur Herstellung von hochkonzentrierten Lösungen kationischer Farbstoffe beschrieben. Kontinuierliche Alkylierung wie im erfindungsgemässen Verfahren ist in diesen Publikationen jedoch nicht erwähnt.

In den folgenden Beispielen sind Teile in Gewichtsteilen, Prozente in Gewichtsprozenten und Temperaturen in Grad Celcius angegeben.

### Beispiel 1:

Eine Aminlösung, bestehend aus 1 Teil 3-Amino-1,2,4-triazol, 4,3 Teilen Schwefelsäure 100 % und 12 Teilen Wasser, wird bei -5° in einem statischen Mischer mit einer Lösung aus 0,8 Teilen Natriumnitrit und 1,2 Teilen Wasser in 3 Minuten diazotiert. Die Temperatur steigt auf + 10° an. Zur blassgelben Diazolösung gibt man in einem Durchflussrührkessel eine Lösung aus 2,3 Teilen Benzylmethyl-anilin in 0,5 Teilen Eisessig. Durch die adiabatische Kupplung mit einer Verweilzeit von 3 Minuten steigt die Temperatur im Reaktionsgemisch auf 30° an. Die Suspension wird in einen weiteren Durchflussrührkessel gefördert, wo durch die Zugabe von 4.8 Teilen Dimethylsulfat unter Konstanthaltung des pH's bei 6 - 7 mit 13,2 Teilen Natriumhydroxidlösung 40 % unter Kühlen bei 40 - 45° der rote kationische Farbstoff der Formel 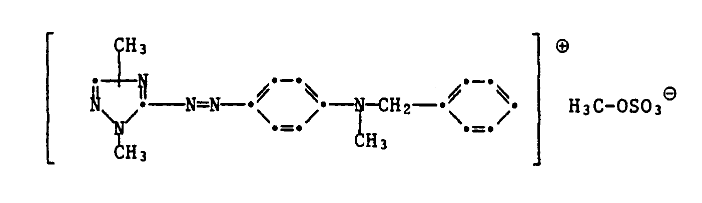
entsteht. Die Reaktionsmischung wird in ein statisches Abtrenngefäss geleitet, wo die Trennung zwischen den hochkonzentrierten Farbstofföl (6,9 Teile) und der Wasserphase (32 Teile) erfolgt. Die Ausbeute über die ganze Synthese liegt bei 83 % der Theorie, bezogen auf Amino-triazol. Durch Verdünnen mit Essigsäure und Wasser kann eine flüsige Handelsform direkt hergestellt werden.

### Beispiel 2:

Eine Aminlösung, bestehend aus 1 Teil 3-Amino-1,2,4-triazol, 5,2 Teilen Schwefelsäure 100 % und 11 Teilen Wasser, wird bei -5° in einem statischen Mischer mit einer Lösung aus 0,8 Teilen Natriumnitrit und 1,2 Teilen Wasser in 3 Minuten diazotiert. Die Temperatur steigt auf + 10° an. Zur blassgelben Diazolösung gibt man in einem Durchflussrührkessel eine Lösung aus 1,77 Teilen Diethylanilin. Durch die adiabatische Kupplung mit einer Verweilzeit von 3 Minuten steigt die Temperatur im Reaktionsgemisch auf 30° an. Die Lösung wird in einen weiteren Mehrkammerreaktor gefördert, wo durch die Zugabe von 4,8 Teilen Dimethylsulfat unter Konstanthaltung des pH's bei 6 - 7 mit 17,8 Teilen Natriumhydroxidlösung 40 % unter Kühlen bei 40 - 45° der rote kationische Farbstoff der Formel 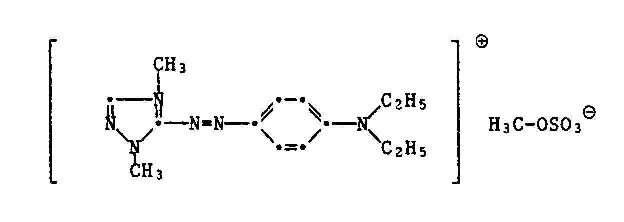
entsteht. Die Reaktionsmischung wird dann in ein statisches Abtrenngefäss geleitet, wo die Trennung zwischen dem hochkonzentrierten Farbstofföl (7,8 Teile) und der Wasserphase (37,5 Teile) erfolgt. Durch Verdünnen des Farbstofföls mit Essigsäure und Wasser kann eine flüssige Handelsform direkt hergestellt werden.

### Beispiel 3:

Eine Anisidin-hydrosulfat Suspension, bestehend aus 1 Teil 1,4-Anisidin, 1,1 Teilen Schwefelsäure 92-94 %, 0,04 Teilen Dispergatoren und 14,2 Teilen Wasser, wird in einem statischen Mischer mit 1,4 Teilen Natriumnitrit 40 % bei einer Temperatur von 25°C diazotiert. Die erhaltene Lösung leitet man kontinuierlich in einen Durchflussrührkessel und kuppelt mit 1,4 Teilen Fischerbase. Diese Reaktion erfolgt bei einer Temperatur von ca. 45°C unter Neutralisation auf pH 4 - 6 mit 0,97 Teilen Natriumhydroxid 40 %.

In einer Kaskade von 3 Durchflussrührkesseln alkyliert man mit 7 Teilen Dimethylsulfat bei einer Temperatur von 35°C und pH-Regelung. Bis der Umsatz ca. 60 % ist, liegt der pH bei 4-5, anschliessend bei Werten von 7 - 8. Nach einer Stunde bei pH 7-8 und 3,14 Teilen Natriumhydroxid 40 %-Verbrauch fällt das kationische Farbstoff-Methylsulfat kristallin aus. Das Produkt wird isoliert und getrocknet (3,2 Teile) oder nach der Isolation bei pH 12 über die Carbinolform zum Farbstoff-Chlorid oder Acetat aufgearbeitet. Die Ausbeute über die ganze Synthese bis zum Farbstoffchlorid liegt bei ca. 93 % der Theorie, bezogen auf angesetztes Anisidin.

Der erhaltene gelbe Farbstoff entspricht der Formel

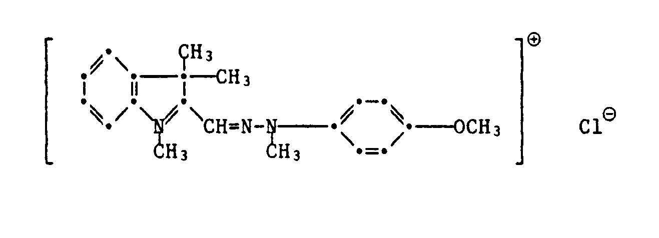

### Beispiel 4:

Eine Aminlösung, bestehend aus 1 Teil 3-Amino-1,2,4-triazol, 5,2 Teilen Schwefelsäure 100 %, 1,8 Teilen Diethylanilin und 11 Teilen Wasser wird kontinuierlich bei einer Temperatur von ca. 25°C in einem Durchflussrührkessel mit 2,1 Teilen einer 40%igen wässrigen Natriumnitritlösung diazotiert und simultan gekuppelt. Ohne Zwischenisolierung wird die Reaktionsmischung, enthaltend den gebildeten Azofarbstoff, in einen weiteren Mehrkammerreaktor gefördert und dort kontinuierlich durch Zugabe von 4,8 Teilen Dimethylsulfat bei ca. 45°C methyliert. Der ph-Wert wird bei der Methylierung durch Zugabe von 40%iger wässriger Natriumhydroxidlösung zwischen 6 und 7 gehalten. Die weitere Aufarbeitung erfolgt wie im Beispiel 2 beschrieben. Man erhält den dort beschriebenen Farbstoff in praktisch gleicher Qualität und mit gleicher Ausbeute.

### Beispiel 5:

Eine Suspension bestehend aus 5,5 Teilen 1,4-Anisidin, 6 Teilen Essigsäure 100 %, 0,2 Teilen Dispergatoren, 7,7 Teilen Fischerbase und 88 Teilen Wasser wird kontinuierlich bei einer Temperator von ca. 50°C in einem Durchflussrührkessel mit 7,7 Teilen einer 40%igen wässrigen Natgriumnitritlösung diazotiert und simultan gekuppelt. Ohne Zwischenisolierung wird die Reaktionsmischung, enthaltend den gebildeten Hydrazonfarbstoff, in einen weiteren Mehrkammerreaktor gefördert und dort kontinuierlich durch Zugabe von 40 Teilen Dimethylsulfat bei ca. 50°C methliert. Der pH-Wert wird durch Zudosierung von wässriger Natriumhydroxidlösung zwischen 7 und 13 gehalten. Die weitere Aufarbeitung erfolgt wie im Beispiel 3 beschrieben. Man erhält den dort aufgeführten Farbstoff in praktisch gleicher Qualität und mit gleicher Ausbeute.

### Beispiel 6:

Eine Suspension, bestehend aus 83 Teilen 2-Amino-5-diisopropylamino-1,3,4-thiadiazol, 50 Teilen N,N-Dimethylanilin, 28,5 Teilen Natriumnitrit, 1 Teil Dispergator und 290 Teilen Wasser, wird bei ca. 20°C kontinuierlich mit 52 Teilen Schwefelsäure 40 % in einem Durchflussrührkessel vermischt. Dabei findet adiabatische simultane Diazotierung und Kupplung statt und man erhält eine Suspension, welche 128 Teile Azofarbstoff enthält. Ohne Zwischenisolierung wird die Suspension in einem weiteren Mehrkammerreaktor gefördert und dort kontinuierlich durch Zugabe von 170 Teilen Dimethylsulfat methyliert. Dabei wird durch Zugabe von 40%iger Natriumhydroxidlösung ein pH-Wert von 4 eingehalten. Die Reaktionsmischung wird dann kontinuierlich mit 40 Teilen ZnCl₂ in 40 Teilen Wasser versetzt, worauf der kationische Farbstoff der Formel 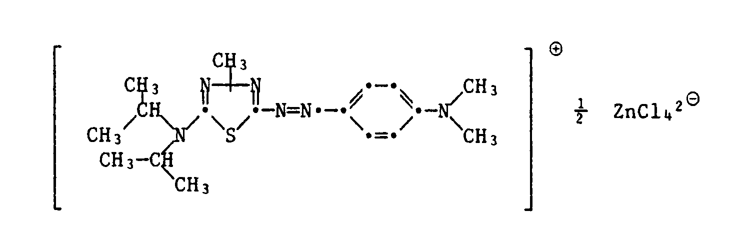
ausfällt. Dieser wird isoliert und wie üblich aufgearbeitet.

## Patentansprüche

1. Verfahren zur Herstellung von kationischen Farbstoffen durch Alkylierung eines elektrisch ungeladenen Azo- oder Hydrazonfarbstoffs, dadurch gekennzeichnet, dass die Alkylierung kontinuierlich durchgeführt wird und dass die Reaktionsmischung nach der Alkylierung so viel Elektrolyt enthält, dass sich ein Zweiphasensystem bildet, bestehend aus weitgehend farbstofffreier wässriger Elektrolytlösung und hochkonzentrierter öliger Farbstoffphase oder festem Farbstoff, und dass der Farbstoff aus dem Zweiphasensystem kontinuierlich abgeschieden wird.

2. Verfahren gemäss Anspruch 1, dadurch gekennzeichnet, dass man einen Azofarbstoff der Formel
D-N=N-K (1)
worin D den Rest einer heterocyclischen Diazokomponente und K den Rest einer Kupplungskomponente bedeutet, oder einen Hydrazonfarbstoff der Formel 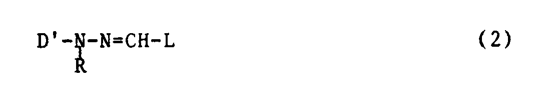 worin Dʹ den Rest einer aromatischen Diazokomponente, L den Rest einer Methylenbase einer N-heterocyclischen Verbindung und R Wasserstoff oder Alkyl bedeutet, alkyliert.

3. Verfahren gemäss einem der Ansprüche 1 oder 2, dadurch gekennzeichnet, dass man den eingesetzten Azofarbstoff durch kontinuierliche Diazotierung und Kupplung herstellt und ihn dann kontinuierlich alkyliert und abscheidet.

4. Verfahren gemäss einem der Ansprüche 1 oder 2, dadurch gekennzeichnet, dass man den eingesetzten Hydrazonfarbstoff durch kontinuierliche Diazotierung und Umsetzung mit einer Methylenbase herstellt und ihn dann kontinuierlich alkyliert und abscheidet.

5. Verfahren gemäss einem der Ansprüche 1 bis 4, dadurch gekennzeichnet, dass man die Reaktionsbedingungen so wählt, dass keine Salzzugabe zur Abscheidung des kationischen Farbstoffes erforderlich ist.

6. Verfahren gemäss einem der Ansprüche 1 bis 5 zur kontinuierlichen Herstellung eines kationischen Farbstoffes der Formel
[ D - N = N - K ]^{⊕} An^{⊖} (3)
worin D den Rest einer heterocyclischen Diazokomponente, K den Rest einer Kupplungskomponente und An^{⊖} ein Anion bedeutet, oder eines Hydrazonfarbstoffes der Formel 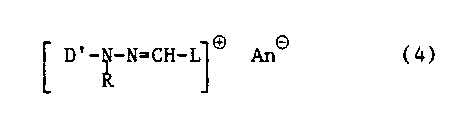 worin D den Rest einer aromatischen Diazokomponente, L den Rest einer Methylenbase einer N-heterocyclischen Verbindung, R Wasserstoff oder Alkyl und An^{⊖} ein Anion bedeutet, dadurch gekennzeichnet, dass man ein Amin der Formel D-NH₂ bzw. D'-NH₂ in einer Mischung aus Wasser und Säure diazotiert, anschliessend mit einer Kupplungskomponente KH bzw. einer Methylenbase L=CH₂ zu einem Azo- oder Hydrazonfarbstoff umsetzt und danach mit einem Alkylierungsmittel umsetzt, wobei man so viel Säure einsetzt, dass sich nach der Alkylierung ein Zweiphasensystem bildet, bestehend aus weitgehend farbstofffreier wässriger Elektrolytlösung und hochkonzentrierter öliger Farbstoffphase oder festem Farbstoff.

7. Verfahren gemäss Anspruch 6, dadurch gekennzeichnet, dass man die Gesamtmenge an Säure bereits zu Beginn zusammen mit dem diazotierbaren Amin einsetzt.

8. Verfahren gemäss Anspruch 7, dadurch gekennzeichnet, dass man so viel Säure einsetzt, dass die Reaktionsmasse nach der Alkylierung 15 bis 25 Gew.%, vorzugsweise 18 bis 22 Gew.% Elektrolyt enthält.

9. Verfahren gemäss einem der Ansprüche 1 - 8, dadurch gekennzeichnet, dass man als Säure Salzsäure, Schwefelsäure, Ameisensäure oder Essigsäure verwendet.

10. Verfahren gemäss einem der Ansprüche 1 bis 9, dadurch gekennzeichnet, dass man die Diazotierung bei einer Temperatur zwischen -10 und 60°C durchführt.

11. Verfahren gemäss einem der Ansprüche 1 bis 10, dadurch gekennzeichnet, dass man als Diazotierungsmittel Natriumnitrit einsetzt.

12. Verfahren gemäss einem der Ansprüche 1 bis 11, dadurch gekennzeichnet, dass man die Umsetzung mit der Kupplungskomponente oder der Methylenbase bei einer Temperatur zwischen 20 und 60°C durchführt.

13. Verfahren gemäss einem der Ansprüche 1 bis 12, dadurch gekennzeichnet, dass man die Alkylierung in einem Mehrkammerreaktor durchführt, welcher 2 bis 10 Zugabestellen für das Alkylierungsmittel und eine starke Base aufweist.

14. Verfahren gemäss einem der Ansprüche 1 bis 13, dadurch gekennzeichnet, dass man die Alkylierung bei einem pH-Wert zwischen 4 und 13 durchführt.

15. Verfahren gemäss einem der Ansprüche 1 bis 14, dadurch gekennzeichnet, dass man die Alkylierung bei einer Temperatur zwischen 25 und 80°C durchführt.

16. Verfahren gemäss einem der Ansprüche 1 bis 15, dadurch gekennzeichnet, dass man als Alkylierungsmittel Dimethylsulfat oder Diethylsulfat verwendet.

17. Verfahren gemäss einem der Ansprüche 1 bis 16, dadurch gekennzeichnet, dass man als starke Base Kalium- oder Natriumhydroxid verwendet.

18. Verfahren gemäss einem der Ansprüche 1 bis 11, dadurch gekennzeichnet, dass man nach der Alkylierung den Farbstoff als flüssiges Farbstofföl abtrennt.

19. Verfahren gemäss einem der Ansprüche 1 bis 18, dadurch gekennzeichnet, dass man eine Diazokomponente der Formel
D - NH₂ (5)
einsetzt, worin D der Rest eines Triazols, Thiazols, Pyrazols oder Thiadiazols ist, der gegebenenfalls durch C₁-C₄-Alkyl, C₁-C₄-Alkoxy, Cyclohexyl, Phenyl, Naphthyl, Amino, Alkanoylamino, Alkylamino oder Dialkylamino substituiert ist und ankondensierte Ringe aufweisen kann.

20. Verfahren gemäss Anspruch 19, dadurch gekennzeichnet, dass man als Diazokomponente 3-Amino-1,2,4-triazol, 3,5-Diamino-1,2,4-triazol, 3-Amino-5-phenyl-1,2,4-triazol, 6-Alkoxy-2-amino-benzothiazol, 2-Amino-1,3,4-thiadiazol, 2-Amino-5-alkylamino-1,3,4-thiadiazol, 2-Amino-5-dialkylamino-1,3,4-thiadiazol, 5-Amino-3-phenyl-1,2,4-thiadiazol, 2-Amino-benzothiazol, 5-Amino-1,2,3-thiadiazol, 2-Amino-thiazol-1,3, 6-Acetylamino-2-aminobenzothiazol, 3-Amino-benzopyrazol oder 2-Phenyl-3-aminopyrazol verwendet.

21. Verfahren gemäss Anspruch 20, dadurch gekennzeichnet, dass man als Diazokomponente 3-Amino-1,2,4-triazol, 6-Methoxy-2-amino-benzothiazol-1,3 oder 2-Amino-5-diisopropylamino-1,3,4-thiadiazol, vor allem 3-Amino-1,2,4-triazol, verwendet.

22. Verfahren gemäss einem der Ansprüche 1 bis 21, dadurch gekennzeichnet, dass man als Kupplungskomponente HK eine Verbindung der Formel 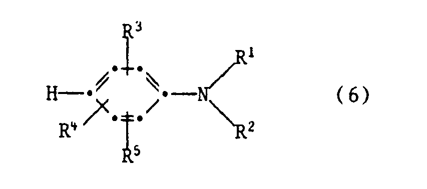 verwendet, worin
R¹ Wasserstoff oder unsubstituiertes oder substituiertes Alkyl oder Alkenyl,
R² Wasserstoff oder unsubstituiertes oder substituiertes Alkyl, Alkenyl, Cycloalkyl oder Phenyl, oder
R¹ und R² zusammen mit dem N-Atom einen 5- oder 6-gliedrigen heterocyclischen Ring, der gegebenenfalls noch ein oder zwei weitere Heteroatome als Ringglieder enthalten oder/und substituiert sein kann, oder R¹ zusammen mit R³ in ortho-Stellung zur Aminogruppe einen teilhydrierten, gegebenenfalls substituierten 5- oder 6-gliedrigen heterocyclischen Ring, der gegebenenfalls noch ein zusätzliches N- oder O-Atom als Ringglied enthalten kann,
R³ und R⁴ unabhängig voneinander Wasserstoff, Alkyl, Alkoxy, Alkanoylamino oder Halogen und
R⁵ Wasserstoff oder zusammen mit R⁴ in ortho-Stellung die Ergänzung zu einem ankondensierten Benzolring bedeutet.

23. Verfahren gemäss Anspruch 22, dadurch gekennzeichnet, dass man eine Kupplungskomponente der Formel (6) verwendet, worin R¹ und R² unabhängig voneinander C₁-C₄-Alkyl, C₁-C₄-Hydroxyalkyl, C₁-C₄-Alkoxy-C₁-C₄-Alkyl, C₁-C₅-Cyanoalkyl, C₁-C₄-Halogenalkyl oder Benzyl oder R¹ und R² zusammen mit dem N-Atom einen Piperidin-, Morpholin- oder Piperazinring oder R¹ zusammen mit R³ in ortho-Stelung zur Aminogruppe und mit dem ankondensierten Benzolring einen gegebenenfalls mit 1 bis 4 C₁-C₄-Alkyl-, vorzugsweise Methylgruppen, substituierten Tetrahydrochinolinrest, R³ Wasserstoff oder zusammen mit R¹ den vorstehend beschreibenen Rest, R⁴ Wasserstoff, C₁-C₄-Alkyl, C₁-C₄-Alkoxy oder Halogen, vorzugsweise Wasserstoff, und R⁵ Wasserstoff bedeuten, wobei jene besonders bevorzugt sind, worin R¹ und R² unabhängig voneinander C₁-C₄-Alkyl oder R¹ zusammen mit R³ in ortho-Stellung zur Aminogruppe und mit dem ankondensierten Benzolring einen unsubstituierten oder mit 1 - 4 Methylgruppen substituierten Tetrahydrochinolinrest, R³ Wasserstoff oder zusammen mit R¹ den vorstehend beschriebenen Rest und R⁴ und R⁵ jeweils Wasserstoff bedeuten.

24. Verfahren gemäss einem der Ansprüche 1 bis 21, dadurch gekennzeichnet, dass man als Kupplungskomponente HK eine Verbindung der Formel 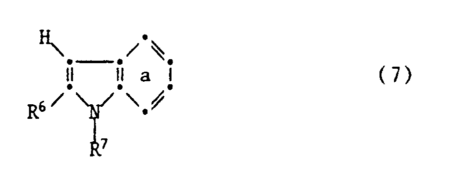 verwendet, worin
R⁶ Methyl, Ethyl oder Phenyl und
R⁷ Wasserstoff, Benzyl oder gegebenenfalls substituiertes Alkyl bedeutet und der Ring a gegebenenfalls substituiert sein kann.

25. Verfahren gemäss einem der Ansprüche 1 bis 8, dadurch gekennzeichnet, dass man eine Diazokomponente der Formel
Dʹ-NH₂ (8)
einsetzt, worin Dʹ der Rest eines aromatischen Amins ist, der gegebenenfalls durch Alkoxy, Nitro, Halogen, Hydroxyalkyl oder Hydrozyalkoxy substituiert ist.

26. Verfahren gemäss Anspruch 25, dadurch gekennzeichnet, dass man als Diazokomponente Anilin oder durch C₁-C₄-Alkoxy, Nitro, Halogen, Hydroxy-C₁-C₄-alkyl oder Hydroxy-C₁-C₄-alkoxy substituiertes Anilin einsetzt.

27. Verfahren gemäss einem der Ansprüche 1 bis 18 oder 25 bis 26, dadurch gekennzeichnet, dass man als Methylenbase ein Benzimidazolin, Indolin, Pyrimidinon oder Benzoindolin mit aktivierter Methylengruppe verwendet.

28. Verfahren gemäss Anspruch 27, dadurch gekennzeichnet, dass man ein 1,3-Dimethyl-2-cyanmethylenbenzimidazolin, 1,3-Dimethyl-2-carboxymethylenbenzimidazolin, 1,3-Dimethyl-6-methylenpyrimidinon-2, 1-Ethyl-2-methylenbenzo(c,d)indolin oder insbesondere 1,3,3-Trimethyl-2-methylenindolin verwendet.

29. Verfahren gemäss einem der Ansprüche 2 oder 3, dadurch gekennzeichnet, dass man für die Gesamtreaktion, Diazotierung, Kupplung, Alkylierung und Abscheidung, bei Temperaturen bis zu 50°C maximal 90 Minuten benötigt.

## Claims

1. A process for the preparation of cationic dyes by alkylation of an azo or hydrazone dye that does not carry an electric charge, wherein the alkylation is carried out continuously and the reaction mixture, after the alkylation, contains sufficient electrolyte that a two-phase system forms consisting of an aqueous electrolyte solution which is substantially free from dye and a highly concentrated oily dye phase or solid dye, and the dye is precipitated continuously from the two-phase system.

2. A process according to claim 1, which comprises alkylating an azo dye of formula
D-N=N-K (1)
wherein D is the radical of a heterocyclic diazo component and K is the radical of a coupling component, or a hydrazone dye of formula 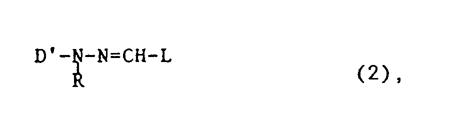 wherein D' is the radical of an aromatic diazo component, L is the radical of a methylene base of an N-heterocyclic compound, and R is hydrogen or alkyl.

3. A process according to either claim 1 or claim 2, wherein the azo dye employed is prepared by continuous diazotisation and coupling and is then continuously alkylated and precipitated.

4. A process according to either claim 1 or claim 2, wherein the hydrazone dye employed is prepared by continuous diazotisation and reaction with a methylene base and is then continuously alkylated and precipitated.

5. A process according to any one of claims 1 to 4, wherein the reaction conditions are so chosen that no addition of salt is necessary to precipitate the cationic dye.

6. A process according to any one of claims 1 to 5 for the continuous preparation of a cationic dye of formula
[D-N=N-K]^{⊕} An^{⊖} (3)
wherein D is the radical of a heterocyclic diazo component, K is the radical of a coupling component and An^{⊖} is an anion, or of a hydrazone dye of formula 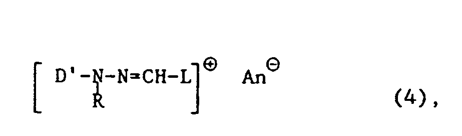 wherein D is the radical of an aromatic diazo component, L is the radical of a methylene base of an N-heterocyclic compound, R is hydrogen or alkyl, and An^{⊖} is an anion, which process comprises diazotising an amine of formula D-NH₂ or D'-NH₂ in a mixture of water and acid then reacting the product with a coupling component KH or with a methylene base L=CH₂ to give an azo or a hydrazone dye, and subsequently reacting the product with an alkylating agent, using sufficient acid that after the alkylation a two-phase system forms consisting of an aqueous electrolyte solution which is substantially free from dye and a highly concentrated oily dye phase or solid dye.

7. A process according to claim 6, wherein the total amount of acid is added right at the start together with the diazotisable amine.

8. A process according to claim 7, wherein sufficient acid is added that, after the alkylation, the reaction mass contains 15 to 25 % by weight, preferably 18 to 22 % by weight, of electrolyte.

9. A process according to any one of claims 1 to 8, wherein the acid used is hydrochloric acid, sulfuric acid, formic acid or acetic acid.

10. A process according to any one of claims 1 to 9, wherein the diazotisation is carried out at a temperature between -10 and 60°C.

11. A process according to any one of claims 1 to 10, wherein sodium nitrite is used as diazotising agent.

12. A process according to any one of claims 1 to 11, wherein the reaction with the coupling component or the methylene base is carried out at a temperature between 20 and 60°C.

13. A process according to any one of claims 1 to 12, wherein the alkylation is carried out in a multi-compartment reactor that has 2 to 10 sites for adding the alkylating agent and a strong base.

14. A process according to any one of claims 1 to 13, wherein the alkylation is carried out at a pH between 4 and 13.

15. A process according to any one of claims 1 to 14, wherein the alkylation is carried out at a temperature between 25 and 80°C.

16. A process according to any one of claims 1 to 15, wherein dimethyl sulfate or diethyl sulfate is used as alkylating agent.

17. A process according to any one of claims 1 to 16, wherein potassium hydroxide or sodium hydroxide is used as strong base.

18. A process according to any one of claims 1 to 11, wherein the dye is separated off as a liquid dye oil after the alkylation.

19. A process according to any one of claims 1 to 18, which comprises the use of a diazo component of formula
D - NH₂ (5)
wherein D is the radical of a triazole, thiazole, pyrazole or thiadiazole, which may be substituted by C₁-C₄alkyl, C₁-C₄alkoxy, cyclohexyl, phenyl, naphthyl, amino, alkanoylamino, alkylamino or dialkylamino, and may comprise fused-on rings.

20. A process according to claim 19, wherein the diazo component used is 3-amino-1,2,4-triazole, 3,5-diamino-1,2,4-triazole, 3-amino-5-phenyl-1,2,4-triazole, a 6-alkoxy-2-aminobenzothiazole, 2-amino-1,3,4-thiadiazole, a 2-amino-5-alkylamino-1,3,4-thiadiazole, a 2-amino-5-dialkylamino-1,3,4-thiadiazole, 5-amino-3-phenyl-1,2,4-thiadiazole, 2-aminobenzothiazole, 5-amino-1,2,3-thiadiazole, 2-amino-1,3-thiazole, 6-acetylamino-2-aminobenzothiazole, 3-aminobenzopyrazole or 2-phenyl-3-aminopyrazole.

21. A process according to claim 20, wherein the diazo component used is 3-amino-1,2,4-triazole, 6-methoxy-2-amino-1,3-benzothiazole or 2-amino-5-diisopropylamino-1,3,4-thiadiazole, especially 3-amino-1,2,4-triazole.

22. A process according to any one of claims 1 to 21, wherein the coupling component HK used is a compound of formula 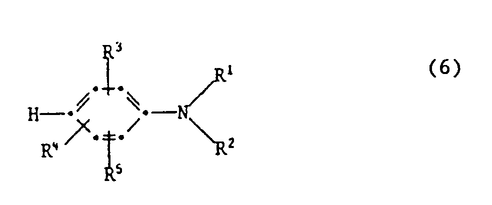 wherein
R¹ is hydrogen or unsubstituted or substituted alkyl or alkenyl,
R² is hydrogen or unsubstituted or substituted alkyl, alkenyl, cycloalkyl or phenyl, or
R¹ and R², together with the N atom, are a 5- or 6-membered heterocyclic ring which may optionally contain one or two additional hetero atoms as ring members and/or may be substituted, or R¹ together with R³ in ortho-position to the amino group are a partially hydrogenated, substituted or unsubstituted 5- or 6-membered heterocyclic ring which may contain an additional N or O atom as a ring member,
R³ and R⁴ independently of each other are hydrogen, alkyl, alkoxy, alkanoylamino or halogen, and
R⁵ is hydrogen or together with R⁴ in ortho-position forms the member which completes a fused-on benzene ring.

23. A process according to claim 22, which comprises the use of a coupling component of formula (6) in which R¹ and R² independently of each other are C₁-C₄alkyl, C₁-C₄hydroxyalkyl, C₁-C₄alkoxy-C₁-C₄alkyl, C₁-C₅cyanoalkyl, C₁-C₄haloalkyl or benzyl, or R¹ and R², together with the nitrogen atom, are a piperidine, morpholine or piperazine ring, or R¹ together with R³ in ortho-position to the amino group and with the fused-on benzene ring are a tetrahydroquinoline radical which is unsubstituted or substituted by 1 to 4 C₁-C₄alkyl groups, preferably methyl groups, R³ is hydrogen or together with R¹ is the radical defined beforehand, R⁴ is hydrogen, C₁-C₄alkyl, C₁-C₄alkoxy or halogen, preferably hydrogen, and R⁵ is hydrogen, with those components being particularly preferred wherein each of R¹ and R² independently of the other is C₁-C₄alkyl, or R¹ together with R³ in ortho-position to the amino group and with the fused-on benzene ring form a tetrahydroquinoline radical which is unsubstituted or substituted by 1 to 4 methyl groups, R³ is hydrogen or together with R¹ is the radical defined beforehand, and each of R⁴ and R⁵ is hydrogen.

24. A process according to any one of claims 1 to 21, wherein the coupling component HK used is a compound of formula 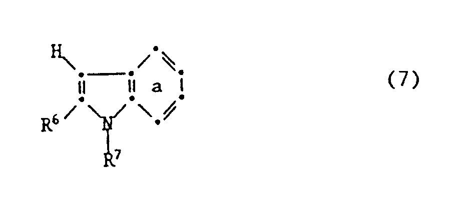 wherein
R⁶ is methyl, ethyl or phenyl, and
R⁷ is hydrogen, benzyl or substituted or unsubstituted alkyl, and the ring a is substituted or unsubstituted.

25. A process according to any one of claims 1 to 18, which comprises the use of a diazo component of formula
D'-NH₂ (8)
wherein D' is the radical of an aromatic amine which is unsubstituted or substituted by alkoxy, nitro, halogen, hydroxyalkyl or hydroxyalkoxy.

26. A process according to claim 25, wherein the diazo component employed is aniline, or aniline which is substituted by C₁-C₄alkoxy, nitro, halogen, hydroxy-C₁-C₄alkyl or hydroxy-C₁-C₄alkoxy.

27. A process according to any one of claims 1 to 18 or 25 to 26, wherein the methylene base used is a benzimidazoline, indoline, pyrimidinone or benzoindoline having an activated methylene group.

28. A process according to claim 27, wherein a 1,3-dimethyl-2-cyanomethylenebenzimidazoline, 1,3-dimethyl-2-carboxymethylenebenzimidazoline, 1,3-dimethyl-6-methylenepyrimidin-2-one, 1-ethyl-2-methylenebenzo(c,d)indoline or, in particular, 1,3,3-trimethyl-2-methyleneindoline is used.

29. A process according to either claim 2 or claim 3, wherein a maximum of 90 minutes at temperatures up to 50°C is required for the total reaction comprising diazotisation, coupling, alkylation and precipitation.

## Revendications

1. Procédé de préparation de colorants cationiques par alkylation d'un colorant de type azoïque ou hydrazone ne portant pas de charges électriques, **caractérisé** en ce que l'alkylation est effectuée en continu et en ce que le mélange réactionnel contient, après l'alkylation, une quantité d'électrolyte telle qu'il se forme un système biphasique, constitué d'une solution aqueuse d'électrolyte, ne contenant pratiquement pas de colorant, et du colorant solide ou d'une phase huileuse hautement concentrée de colorant, et en ce que le colorant est séparé en continu du système biphasique.

2. Procédé conforme à la revendication 1, **caractérisé** en ce que l'on alkyle un colorant azoïque de formule
D-N=N-K (1)
dans laquelle D représente le résidu d'un composant diazotable hétérocyclique et K représente le résidu d'un copulant, ou un colorant de type hydrazone de formule 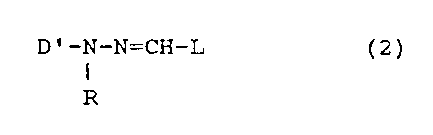 dans laquelle D' représente le résidu d'un composant diazotable aromatique, L représente le résidu d'une base méthylénique dérivée d'un composé à hétérocycle azoté, et R représente un atome d'hydrogène ou un groupe alkyle.

3. Procédé conforme à l'une des revendications 1 et 2, **caractérisé** en ce que l'on prépare, par diazotation et copulation en continu, le colorant azoïque utilisé, puis on l'alkyle et on le sépare en continu.

4. Procédé conforme à l'une des revendications 1 et 2, **caractérisé** en ce que l'on prépare, par diazotation et réaction avec une base méthylénique en continu, le colorant de type hydrazone utilisé, puis on l'alkyle et on le sépare en continu.

5. Procédé conforme à l'une des revendications 1 et 4, **caractérisé** en ce que l'on choisi les conditions de réaction de telle façon qu'aucune addition de sel n'est nécessaire pour la séparation du colorant cationique.

6. Procédé conforme à l'une des revendications 1 et 2, pour la préparation en continu d'un colorant cationique de formule
[D - N = N - K]^{⊕} An^{⊖} (3)
dans laquelle D représente le résidu d'un composant diazotable hétérocyclique, K représente le résidu d'un copulant et An^{⊖} représente un anion, ou d'un colorant de type hydrazone de formule 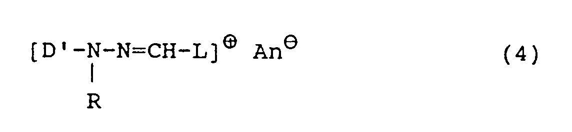 dans laquelle D' représente le résidu d'un composant diazotable aromatique, L représente le résidu d'une base méthylénique d'un composé à hétérocycle azoté, R représente un atome d'hydrogène ou un groupe alkyle et An^{⊖} représente un anion, **caractérisé** en ce que l'on effectue la diazotation d'une amine de formule D-NH₂ ou D'-NH₂, dans un mélange d'eau et d'acide, puis on la fait réagir avec un copulant KH ou avec une base méthylénique L=CH₂, pour obtenir un colorant azoïque ou un colorant de type hydrazone, que l'on fait ensuite réagir avec un agent d'alkylation, la quantité d'acide introduite étant telle qu'il se forme, après l'alkylation, un système biphasique constitué d'une solution aqueuse d'électrolyte, ne contenant pratiquement pas de colorant, et du colorant solide ou d'une phase huileuse hautement concentrée de colorant.

7. Procédé conforme à la revendication 6, **caractérisé** en ce que la quantité totale d'acide est déjà introduite au début, conjointement avec l'amine diazotable.

8. Procédé conforme à la revendication 7, **caractérisé** en ce que l'on met en jeu une quantité d'acide telle que la masse réactionnelle contient, après l'alkylation, de 15 à 25 % en poids et de préférence de 18 à 22 % en poids d'électrolyte.

9. Procédé conforme à l'une des revendications 1 à 8, **caractérisé** en ce que l'on utilise, comme acide, de l'acide chlorhydrique, de l'acide sulfurique, de l'acide formique ou de l'acide acétique.

10. Procédé conforme à l'une des revendications 1 à 9, **caractérisé** en ce que l'on réalise la diazotation à une température située entre -10°C et 60°C.

11. Procédé conforme à l'une des revendications 1 à 10, **caractérisé** en ce que l'on utilise du nitrite de sodium en tant qu'agent de diazotation.

12. Procédé conforme à l'une des revendications 1 à 11, **caractérisé** en ce que l'on réalise la réaction avec le copulant ou la base méthylénique à une température située entre 20°C et 60°C.

13. Procédé conforme à l'une des revendications 1 à 12, **caractérisé** en ce que l'on réalise l'alkylation dans un réacteur à plusieurs chambres, présentant de 2 à 10 points d'introduction pour l'agent d'alkylation et une base forte.

14. Procédé conforme à l'une des revendications 1 à 13, **caractérisé** en ce que l'on effectue l'alkylation à pH situé entre 4 et 13.

15. Procédé conforme à l'une des revendications 1 à 14, **caractérisé** en ce que l'on effectue l'alkylation à une température située entre 25°C et 80°C.

16. Procédé conforme à l'une des revendications 1 à 15, **caractérisé** en ce que l'on utilise du sulfate de diméthyle ou du sulfate de diéthyle en tant qu'agent d'alkylation.

17. Procédé conforme à l'une des revendications 1 à 16, **caractérisé** en ce que l'on utilise de l'hydroxyde de sodium ou de potassium en tant que base forte.

18. Procédé conforme à l'une des revendications 1 à 11, **caractérisé** en ce qu'après l'alkylation, on sépare le colorant sous forme d'huile liquide.

19. Procédé conforme à l'une des revendications 1 à 18, **caractérisé** en ce que l'on utilise un composant diazotable de formule
D - NH₂ (5)
dans laquelle D représente le résidu d'un triazole, d'un diazole, d'un pyrazole ou d'un thiadiazole, qui est éventuellement substitué par un ou des groupes alkyle en C₁₋₄, alkoxy en C₁₋₄, cyclohexyle, phényle, naphtyle, amino, alcanoylamino, alkylamino ou dialkylamino, et qui peut comporter des cycles condensés.

20. Procédé conforme à la revendication 19, **caractérisé** en ce que l'on utilise, en tant que composant diazotable, du 3-amino-1,2,4-triazole, du 3,5-diamino-1,2,4-triazole, du 3-amino-5-phényl-1,2,4-triazole, un 6-alcoxy-2-amino-benzothiazole, du 2-amino-1,3,4-thiadiazole, un 2-amino-5-alkylamino-1,3,4-thiadiazole, un 2-amino-5-dialkylamino-1,3,4-thiadiazole, du 5-amino-3-phényl-1,2,4-thiadiazole, du 2-amino-benzothiazole, du 5-amino-1,2,3-thiadiazole, du 2-amino-1,3-thiazole, du 6-acétylamino-2-aminobenzothiazole, du 3-amino-benzopyrazole ou du 2-phényl-3-aminopyrazole.

21. Procédé conforme à la revendication 20, **caractérisé** en ce que l'on utilise, en tant que composant diazotable, du 3-amino-1,2,4-triazole, du 6-méthoxy-2-amino-1,3-benzothiazole ou du 2-amino-5-diisopropylamino-1,3,4-thiadiazole, et surtout du 3-amino-1,2,4-triazole.

22. Procédé conforme à l'une des revendications 1 à 21, **caractérisé** en ce que l'on utilise, en tant que copulant HK, un composé de formule 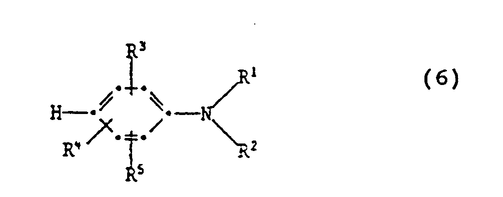 dans laquelle
R¹ représente un atome d'hydrogène ou un groupe alkyle ou alcényle, substitué ou non, et
R² représente un atome d'hydrogène ou un groupe alkyle, alcényle, cycloalkyle ou phényle, substitué ou non, ou bien R¹ et R² forment, conjointement avec l'atome d'azote, un hétérocycle à 5 ou 6 chaînons, qui peut être substitué et/ou comporter éventuellement encore un ou deux autres hétéroatomes en tant que chaînons, ou R¹ forme, conjointement avec R³ placé en position ortho par rapport au groupe amino, un hétérocycle à 5 ou 6 chaînons, partiellement hydrogéné, éventuellement substitué et qui peut éventuellement comporter encore un atome supplémentaire d'azote ou d'oxygène en tant que chaînon,
R³ et R⁴ représentent chacun, indépendamment l'un de l'autre, un atome d'hydrogène ou d'halogène ou un groupe alkyle, alcoxy ou alcanoylamino, et
R⁵ représente un atome d'hydrogène ou, conjointement avec R⁴ placé en position ortho, forme un noyau benzénique condensé.

23. Procédé conforme à la revendication 22, **caractérisé** en ce que l'on utilise un copulant de formule (6) dans laquelle R¹ et R² représentent chacun, indépendamment l'un de l'autre, un groupe alkyle en C₁₋₄, hydroxyalkyle en C₁₋₄, (alcoxy en C₁₋₄)-alkyle en C₁₋₄, cyanoalkyle en C₁₋₅, halogénoalkyle en C₁₋₄ ou benzyle, ou bien R¹ et R² forment avec l'atome d'azote un cycle pipéridine, morpholine ou pipérazine, ou bien R¹ forme, avec R³ placé en position ortho par rapport au groupe amino et avec le noyau benzénique condensé, un résidu de tétrahydroquinoline éventuellement substitué par de 1 à 4 groupes alkyle en C₁₋₄, qui sont de préférence des groupes méthyle, R³ représente un atome d'hydrogène ou forme avec R¹ le résidu décrit ci-dessus, R⁴ représente un atome d'hydrogène ou d'halogène ou un groupe alkyle en C₁₋₄ ou alcoxy en C₁₋₄, et de préférence un atome d'hydrogène, et R⁵ représente un atome d'hydrogène, avec une préférence particulière pour les composés dans lesquels R¹ et R² représentent chacun, indépendamment l'un de l'autre, un groupe alkyle en C₁₋₄, ou R¹ forme, avec R³ placé en position ortho par rapport au groupe amino et avec le noyau benzénique condensé, un résidu de tétrahydroquinoline non substitué ou substitué par 1 à 4 groupes méthyle, R³ représente un atome d'hydrogène ou forme avec R¹ le résidu décrit ci-dessus, et R₄ et R₅ représentent chacun un atome d'hydrogène.

24. Procédé conforme à l'une des revendications 1 à 21, **caractérisé** en ce que l'on utilise, comme copulant HK, un composé de formule 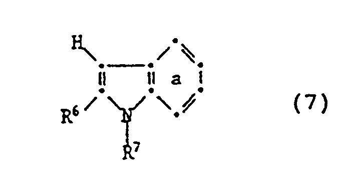 dans laquelle
R₆ représente un groupe méthyle, éthyle ou phényle, et
R⁷ représente un atome d'hydrogène, un groupe benzyle ou un groupe alkyle éventuellement substitué,
et le noyau a peut être éventuellement substitué.

25. Procédé conforme à l'une des revendications 1 à 18, **caractérisé** en ce que l'on utilise un composant diazotable de formule
D'-NH₂ (8)
dans laquelle D' représente le résidu d'une amine aromatique éventuellement substituée par un atome d'halogène ou par un groupe alcoxy, nitro, hydroxyalkyle ou hydroxyalcoxy.

26. Procédé conforme à la revendication 25, **caractérisé** en ce que l'on utilise comme composant diazotable de l'aniline ou une aniline substituée par un atome d'halogène ou par un groupe alcoxy en C₁₋₄, nitro, hydroxyalkyle en C₁₋₄ ou hydroxyalcoxy en C₁₋₄.

27. Procédé conforme à l'une des revendications 1 à 18 ou 25 à 26, **caractérisé** en ce que l'on utilise comme base méthylénique une benzimidazoline, une indoline, une pyrimidinone ou une benzoindoline, à groupe méthylène activé.

28. Procédé conforme à la revendication 27, **caractérisé** en ce que l'on utilise de la 1,3-diméthyl-2-cyanométhylène-benzimidazoline, de la 1,3-diméthyl-2-carboxyméthylène-benzimidazoline, de la 1,3-diméthyl-6-méthylène-pyrimidinone-2, de la 1-éthyl-2-méthylène-benzo(c,d)indoline ou en particulier de la 1,3,3-triméthyl-2-méthylène-indoline.

29. Procédé conforme à l'une des revendications 2 et 3, **caractérisé** en ce que la réaction globale, diazotation, copulation, alkylation et séparation, nécessite au maximum 90 minutes à des températures valant jusqu'à 50°C.
